# EUROPÄISCHE PATENTSCHRIFT

(11) **EP 3 078 984 B1**
(45) Veröffentlichungstag und Bekanntmachung des Hinweises auf die Patenterteilung: **01.03.2017**
(21) Anmeldenummer: 16159153.2
(22) Anmeldetag: 08.03.2016
(51) Int. Cl.: G01S 17/42, G01S 7/481

(54) **OPTOELEKTRONISCHER SENSOR UND VERFAHREN ZUR ERFASSUNG VON OBJEKTEN IN EINEM ÜBERWACHUNGSBEREICH**
OPTOELECTRONIC SENSOR AND METHOD FOR DETECTING OBJECTS IN A SURVEILLANCE AREA
CAPTEUR OPTOELECTRONIQUE ET PROCEDE DE DETECTION D'OBJETS DANS UNE ZONE DE SURVEILLANCE

(30) Priorität: 08.04.2015 DE 102015105263
(43) Veröffentlichungstag der Anmeldung: 12.10.2016
(73) Patentinhaber: SICK AG, 79183 Waldkirch (DE)
(72) Erfinder: Krämer, Joachim, 79249 Merzhausen (DE); Engler, Michael, Dr., 79350 Sexau (DE); Hammes, Markus, Dr., 79117 Freiburg (DE)

(56) Entgegenhaltungen:
- EP-A1- 2 375 266
- EP-A2- 1 312 936
- DE-A1- 10 308 085
- DE-C2- 4 345 446
- US-A- 5 033 845

## Beschreibung

Die Erfindung betrifft einen optoelektronischen Sensor, insbesondere Laserscanner, und ein Verfahren zur Überwachung von Objekten in einem Überwachungsbereich nach dem Oberbegriff von Anspruch 1 beziehungsweise 11.

Für optische Überwachungen werden häufig Laserscanner eingesetzt. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Eine wichtige Anwendung ist die Absicherung einer Gefahrenquelle in der Sicherheitstechnik. Der Laserscanner überwacht dabei ein Schutzfeld, das während des Betriebs der Maschine von Bedienpersonal nicht betreten werden darf. Da der Laserscanner Winkel- und Entfernungsinformationen gewinnt, können zweidimensionale Positionen von Objekten in dem Überwachungsbereich und damit auch in dem Schutzfeld ermittelt werden. Erkennt der Laserscanner einen unzulässigen Schutzfeldeingriff, etwa ein Bein einer Bedienperson, so löst er einen Nothalt der Maschine aus.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

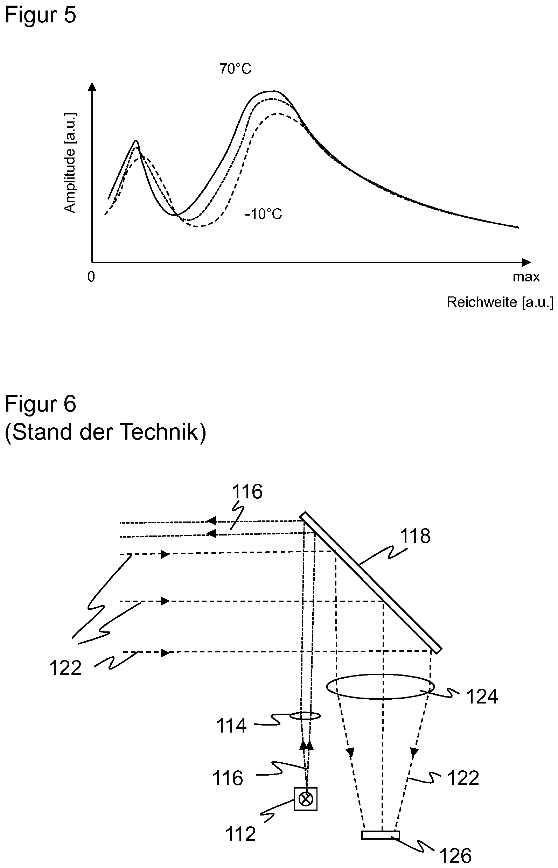

Bei der fortgesetzten Miniaturisierung von Laserscannern zeigen sich Probleme. Figur 6 illustriert den Strahlengang in einem herkömmlichen Laserscanner mit biaxialer Strahlführung. Ein Lichtsender 112 erzeugt ein Lichtsignal, das in einer Sendeoptik 114 kollimiert zu einem Lichtstrahl 116 wird, auf eine drehbare Ablenkeinheit 118 trifft und dann in einen Überwachungsbereich 120 ausgesandt wird. Nach Remission an einem Objekt in dem Überwachungsbereich 120 kehrt das remittierte Lichtsignal 122 zurück, wird erneut an der Ablenkeinheit 118 abgelenkt und über eine Empfangsoptik 124 auf einen Lichtempfänger 126 geleitet.

Prinzipiell kann nun durch Verringerung des Abstands der optischen Achsen von Sendeoptik 114 und Empfangsoptik 124 die Baugröße minimiert werden. Ab einer gewissen Baugrößenreduktion wird aber der Platzbedarf von Lichtsender 112 und Lichtempfänger 26 einschließlich Ansteuerelektronik ausschlaggebend, die nur so weit zusammenrücken können, bis sie direkt nebeneinander liegen. Bei geringem Abstand besteht außerdem eine erhöhte Gefahr von störendem elektromagnetischen Übersprechen und Streulicht. Eine herkömmliche Lösung liegt darin, Lichtsender 112 und Lichtempfänger 126 wie in Figur 6 gezeigt auf unterschiedlichen Höhen und jeweils eigenen Platinen zu platzieren. Eine elektronische und optische Trennung wird durch nicht dargestellte Abschirmbleche und Tuben erreicht. Diese Maßnahmen erhöhen aber die Herstellkosten und Systemkomplexität.

Ein anderes Problem, das im Zuge der Weiterentwicklung eines Laserscanners auftaucht, ist das Temperaturverhalten der sogenannten Signaldynamik. Unter der Signaldynamik versteht man die relative Stärke des Empfangssignals in Abhängigkeit des Objektabstands, die auf die Maximalreichweite des Laserscanners normiert wird. Die Remission des Objekts wird dabei konstant gehalten.

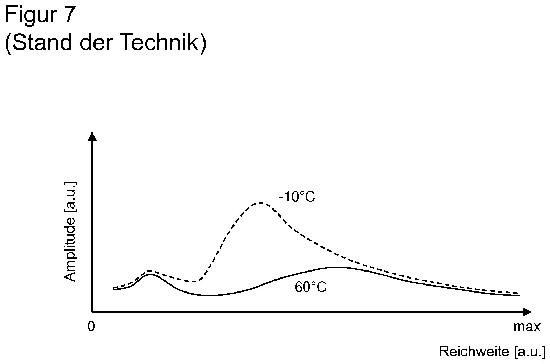

Figur 7 zeigt einen Vergleich der Signaldynamik einer bestimmten beispielhaften herkömmlichen Empfangsoptik bei -10°C (gestrichelte Linie) und bei 60°C (durchgezogene Linie). Der praktisch nicht erreichbare Idealfall wäre eine flache Signaldynamik, also gleiche Empfindlichkeit unabhängig von der Reichweite. Um einem zu starken Abfall der Signaldynamik im Nahbereich entgegenzuwirken, ist bekannt, die Empfangslinse mit einer Nahzone zu versehen, die für das erste Maximum der in Figur 7 gezeigten Signaldynamiken verantwortlich ist.

Wie der deutlich sichtbare Unterschied der beiden Kurven in Figur 7 veranschaulicht, ist die Signaldynamik abhängig von der Temperatur. Dies liegt daran, dass der auf dem Lichtempfänger 26 abgebildete Empfangslichtfleck mit der Ausdehnung und Brechzah länderung seine Form und Größe ändert. Der bei Maximalreichweite justierte Lichtfleck wandert dann bei Verringerung des Objektabstands je nach Temperatur in unterschiedlicher Geschwindigkeit aus dem Sichtfeld des Lichtempfängers 126. Dies führt zu der unerwünschten temperaturabhängigen Änderung der Signaldynamik. Eine zu starke Abschwächung kann zu Detektionsproblemen, umgekehrt aber auch eine Erhöhung des Signaldynamikmaximums zu einer Überempfindlichkeit beispielsweise gegen Staub führen. Die starke Temperaturabhängigkeit der Signaldynamik erschwert es, die Signalstärke über den gesamten zulässigen Temperaturbereich richtig einzustellen.

Eine herkömmliche Lösung liegt in der Verwendung von Glaslinsen, die nur eine sehr geringe Brechzahländerung und Ausdehnung mit der Temperatur zeigen. Allerdings sind Glaslinsen teurer in der Herstellung und bezüglich der möglichen Formgebung eingeschränkt. Bei einer Kunststofflinse kann ein Material mit möglichst geringer Temperaturabhängigkeit gewählt werden, aber der Effekt wird dadurch allenfalls abgemildert.

Die schon im Zusammenhang mit Figur 6 diskutierte biaxiale Anordnung von Lichtsender 112 und Lichtempfänger 126 führt auch noch auf einen dritten Problemkomplex. Eine der einleitend genannten Sicherheitsanforderung aus der Norm EN61496-3 ist die Erkennung einer Beeinträchtigung der Transmission einer Frontscheibe des Laserscanners, auf die bei Einschränkung der Detektionsfähigkeit mit einer sicherheitsgerichteten Abschaltung reagiert werden muss. Dabei ist sowohl eine homogene Verschmutzung, etwa durch Staub, als auch eine punktuelle Beeinträchtigung durch kleine Störobjekte ab einer festgelegten Mindestgröße aufzudecken. Ebenfalls auszuschließen ist eine bewusste Manipulation durch Abdeckung von Frontscheibenbereichen mit kleinen Abschattungsobjekten.

Eine beispielsweise aus der DE 43 45 446 C2 bekannte Lösung ist eine regelmäßige Verschmutzungsmessung der Frontscheibe. Dazu werden über den Winkelbereich der Frontscheibe optische Testkanäle verteilt, die entsprechend unterschiedliche Bereiche der Frontscheibe testweise durchstrahlen und dadurch eine beeinträchtigte Transmission erkennen. Die Verteilung der Testkanäle muss dicht genug sein, um die von der Norm geforderten kleinen Verschmutzungs- oder Manipulationsobjekte sicher zu detektieren. Liegt nun der ausgesandte Lichtstrahl 116 wie in Figur 6 nicht auf der Mittenachse der Empfangsoptik 124, anders als bei einem koaxialen System, dann werden besonders viele Testkanäle erforderlich. Das liegt daran, dass die Nahbereichszone der Empfangslinse schon durch punktuelle Verschmutzung oder Manipulation abgedeckt werden kann und der Laserscanner damit im Nahbereich eine große Einbuße seiner Detektionsfähigkeit erleidet. Eine große Zahl von Testkanälen erhöht natürlich die Herstellkosten und den benötigten Bauraum.

Die EP 1 312 936 A2 offenbart eine optoelektronische Vorrichtung, in der sendeseitig der Strahl mit einem Schwingspiegel periodisch abgelenkt wird. Empfangseitig ist eine stationäre Optik vorgesehen, die Empfangslichtstrahlen aus beliebigen Segmenten des Überwachungsbereichs auf den Empfänger führen kann. Sie weist je eine Lage außen liegende Prismenelemente und innen liegende Prismenelemente auf, wobei die innere Lage auf einer quer zum Einfall des Empfangslichts orientierten Lichtleiterplatte mit mehreren Schichten unterschiedlicher Brechungsindizes angeordnet ist. Am Ausgang der Lichtleiterplatte sitzen noch ein Umlenkspiegel und eine Linse.

Die EP 2 375 266 A1 zeigt einen Laserscanner, dessen Empfangslinse mit dem Drehspiegel mitrotiert. In einer Ausführungsform sorgt ein stationär vor dem Lichtempfänger angeordnetes Prisma für eine Kompensation des Taumelns des Empfangslichtflecks.

In der DE 103 08 085 A1 wird auf verschiedene Arten eine Umlenkung in einem Lichttaster erreicht. Eine Ausführungsform sieht vor, dass zwei Kugelhälften rotieren, das Empfangslicht zugleich bündeln und an ihrer Grundfläche ablenken. Die beiden Kugelflächen sind einander zur vollen Kugel ergänzend angeordnet, jedoch mit einem kleinen Abstand, so dass der Empfangsstrahl jeweils an der Grundfläche totalreflektiert wird.

Die US 5 033 845 offenbart eine distanzmessende Vorrichtung mit einem Polygonspiegelrad, wobei in den jeweiligen Winkelstellungen nach einem Triangulationsprinzip Entfernungen gemessen werden. Die Empfangsoptik ist zweiteilig mit je einer Zylinderlinse vor und nach der Ablenkung durch das Polygonspiegelrad. Die aus Sicht des Lichtstrahls vordere Linse ist plankonvex und halbiert, bildet also in einer Seitenansicht in etwa ein 90°-Segment einer Ellipse.

Es ist daher Aufgabe der Erfindung, einen vereinfachten Geräteaufbau bei weiterer Baugrößenreduktion zu ermöglichen.

Diese Aufgabe wird durch einen optoelektronischen Sensor und ein Verfahren zur Überwachung von Objekten in einem Überwachungsbereich nach Anspruch 1 beziehungsweise 11 gelöst. Der Sensor tastet gattungsgemäß mit einem periodisch abgelenkten Lichtstrahl den Überwachungsbereich ab und wertet das Empfangssignal des von Objekten in dem Überwachungsbereich remittierten Lichtstrahls aus. Dabei wird insbesondere die Entfernung der Objekte aus einer Lichtlaufzeit zwischen Aussenden und Empfangen des Lichtstrahls bestimmt. Die Erfindung geht nun von dem Grundgedanken aus, eine Empfangsoptik zur Strahlformung des remittierten Lichtstrahls so zu gestalten, dass sie zusätzlich dessen Hauptstrahlrichtung ablenkt. Dadurch wird der Empfangslichtfleck gegenüber der ursprünglichen Einfallsrichtung lateral versetzt.

Die Erfindung hat den Vorteil, dass der Versatz des Empfangslichtflecks für einen größeren Abstand zwischen Sende- und Empfangsposition genutzt werden kann. Durch den vergrößerten Basisabstand zwischen Lichtsender und Lichtempfänger wird dann eine weitere Reduktion der Baugröße möglich. Damit reduzieren sich zugleich elektromagnetisches Übersprechen und Empfang von Streulicht. Gleichzeitig wird so die Grundlage geschaffen, das auf den ersten Blick gar nicht verwandte Problem der Temperaturabhängigkeit der Signaldynamik zu lösen und damit insbesondere die Staubempfindlichkeit zu senken. Schließlich sind sogar noch zusätzliche Ausgestaltungen der Empfangsoptik denkbar, mit denen auch die Verschmutzungsmessung vereinfacht wird.

Die Empfangsoptik weist bevorzugt mindestens eine Grenzfläche auf, die gegenüber einer Querschnittsfläche des einfallenden remittierten Lichtstrahls verkippt ist. Die Empfangsoptik ist also nicht wie herkömmlich rotationssymmetrisch zum Hauptstrahl des einfallenden remittierten Lichtstrahls. Die verkippte Grenzfläche, die möglicherweise ein Verkippen eines optischen Elements der Empfangsoptik insgesamt impliziert, bewirkt eine Lichtbrechung des Hauptstrahls und ist damit ein einfaches Mittel, den gewünschten lateralen Versatz zu erreichen. Denkbar ist, dass eine Grenzfläche gestuft gestaltet wird, also beispielsweise in einer ursprünglich planen Fläche eine schräge Stufe angebracht wird.

Die Empfangsoptik weist bevorzugt ein keilförmiges optisches Element auf. Dieses Element bewirkt die Ablenkung der Hauptstrahlrichtung. Es ist denkbar, die optischen Funktionen der Strahlformung und Ablenkung zu trennen und dafür unterschiedliche optische Elemente vorzusehen. Das keilförmige optische Element trägt dann nicht zur Strahlformung bei, etwa im Falle eines Prismas.

Die Empfangsoptik weist bevorzugt eine keilförmige Empfangslinse auf. Das ist ein Beispiel, bei dem die Strahlformung und Ablenkung in einem Element integriert ist. Die keilförmige Empfangslinse hat insgesamt die Form eines Keils mit einer dicken und einer dünnen Seite, zusätzlich ist aber zumindest eine der beiden Hauptflächen gekrümmt, wodurch die Linseneigenschaften entstehen. Äquivalent zu einer keilförmigen Empfangslinse ist die einstückige Verbindung einer üblichen Linse mit einem Prisma.

Die keilförmige Empfangslinse ist bevorzugt plankonvex ausgebildet. Dabei wird also nur eine der beiden Hauptflächen gekrümmt ausgebildet, die andere bleibt flach. Die konvexe Krümmung macht die keilförmige Empfangslinse zu einer Sammellinse, wie sie als Empfangsoptik üblicherweise benötigt wird.

Die keilförmige Empfangslinse bildet bevorzugt in einer Draufsicht einen abgeschnittenen Kreis. Es wird also gleichsam ein Stück von der Empfangslinse abgeschnitten, und zwar vorzugsweise an der schmalen Kante des Keils. Das erleichtert die Herstellung der Keilform. Außerdem kann die Empfangslinse noch näher an den Sendestrahl heranrücken, ohne von ihm durchsetzt zu werden. Gleichzeitig ändert sich die strahlformende Wirkung, denn es fehlen die Strahlanteile des abgeschnittenen Stücks. Dadurch kann der Empfangslichtfleck wieder näher an den Lichtsender rücken, was aber durch die Keilform deutlich überkompensiert wird.

Die keilförmige Empfangslinse weist bevorzugt eine Nahbereichszone auf, die deutlich größer ist als die Verdeckung durch ein normiertes Abdeckungsobjekt. Die Nahbereichszone dient wie eingangs erläutert dazu, die Signaldynamik im Nahbereich anzuheben. Herkömmlich ist es möglich, den Nahbereich mit kleinen Objekten zu verdekken, und deshalb muss eine entsprechend aufwändige Verschmutzungsmessung durchgeführt werden. Eine vergrößerte Nahbereichszone ist gegen diese Störung beziehungsweise Manipulation mit kleinen Objekten unempfindlich, da sie nicht mehr so einfach verdeckt werden kann. Dementsprechend genügen für die Verschmutzungsmessung deutlich weniger Testkanäle, und die Detektionssicherheit erhöht sich. Beispiele für vergrößerte Nahbereichszonen sind das Vorsehen mehrerer voneinander separierter oder verteilter Nahbereichszonen oder beispielsweise eine ringförmige Nahbereichszone insbesondere am Außenrand der Empfangslinse.

Lichtsender und Lichtempfänger sind bevorzugt in einem biaxialen Aufbau nebeneinander mit zueinander parallelen optischen Achsen angeordnet. Herkömmlich wird stattdessen häufig ein koaxialer Aufbau gewählt, bei dem der Sendestrahl mit seinem geringeren Querschnitt zentral im Empfangsstrahl liegt. Eine biaxiale Anordnung ist aber gerade bei sehr kleiner Bauweise einfacher, und gleich mehrere Nachteile gegenüber dem koaxialen Aufbau werden durch die Erfindung ausgeräumt.

Der Lichtsender ist bevorzugt so neben dem Lichtempfänger angeordnet, dass die Empfangsoptik die Hauptstrahlrichtung von dem Lichtsender weg ablenkt. Das wird natürlich auch erreicht, indem die Empfangsoptik entsprechend gedreht wird. Jedenfalls wird die Richtung der Ablenkung des Hauptstrahls gerade dafür genutzt, dass der einfallende remittiere Lichtstrahl vom ausgesandten Lichtstrahl weg gelenkt und demnach der Basisabstand zwischen Lichtsender und Lichtempfänger vergrößert wird.

Lichtsender und Lichtempfänger sind bevorzugt auf einer gemeinsamen Platine angeordnet. Für genügend Abstand zwischen Lichtsender und Lichtempfänger sorgt erfindungsgemäß die Ablenkung der Hauptstrahlrichtung in der Empfangsoptik. Ein Höhenversatz wie in Figur 6 ist nicht mehr erforderlich. Deshalb ist es möglich, für Lichtsender und Lichtempfänger dieselbe Platine zu nutzen und so die Herstellkosten deutlich zu senken.

Die Empfangsoptik ist bevorzugt so justiert, dass der Empfangslichtfleck bei einer niedrigsten Betriebstemperatur fokussiert ist. Indem die Fokussierung auf die tiefste Betriebstemperatur ausgelegt wird, ist sie bei Raumtemperatur leicht und bei weiter zunehmender Temperatur deutlicher defokussiert. Folglich nimmt die Lichtfleckgröße mit der Temperatur zu. Wegen der Ablenkung des einfallenden Lichtstrahls in der Empfangsoptik wächst der Empfangslichtfleck in Richtung zu dem Sendestrahl und gleicht so ein temperaturbedingtes Herauswandern zumindest teilweise aus.

Die Empfangsoptik ist etwas allgemeiner gesprochen bevorzugt so justiert, dass die temperaturbedingte Änderung von Lichtfleckgröße und -zentrum bei Temperaturänderungen im Sichtfeld des Lichtempfängers zur gleichen Empfangsleistung führen. Dabei sind Objektabstand und Remission als konstant angenommen. Diese Kompensation kann erreicht werden, wenn das Spotzentrum in Richtung Sendestrahl wandert und die Lichtfleckgröße gleichzeitig zunimmt. Dies ist bei Kunststoffen i. d. R. aufgrund der Abnahme des Brechungsindex bei ansteigender Temperatur der Fall und es erweist sich deshalb als besonders günstig, den Spot bei niedrigen Temperaturen zu fokussieren. Indem die Fokussierung auf die tiefste Betriebstemperatur ausgelegt wird, ist sie bei Raumtemperatur leicht und bei weiter zunehmender Temperatur deutlicher defokussiert. Wegen der Ablenkung des einfallenden Lichtstrahls in der Empfangsoptik wächst der Empfangslichtfleck in Richtung zu dem Sendestrahl und gleicht so ein temperaturbedingtes Herauswandern zumindest teilweise aus. Im Idealfall bleibt die Kompensation bei verschiedenen Objektabständen erhalten und die Signaldynamik wird deutlich robuster gegen Temperaturveränderungen. Die Kompensation ist insbesondere bei mittleren Objektabständen im Maximum der Signaldynamik entscheidend, da hier der Spot nur teilweise auf dem Lichtempfänger abgebildet wird und sich die Temperaturänderungen am deutlichsten bemerkbar machen. Zudem weist der Sensor im Maximum der Signaldynamik die größte Staubempfindlichkeit auf. Die Änderung der Lichtfleckgröße bzw. des -zentrums sind abhängig vom Material der Empfangslinse, dem Keilwinkel, der Fokuslänge, dem Durchmesser von Spot und Lichtempfänger und der Justage des Spots. Sie müssen daher entsprechend gewählt werden. Die genannten Temperatureffekte zeigen sich besonders dann, wenn die Empfangsoptik und insbesondere die keilförmige Empfangslinse aus Kunststoff hergestellt ist und deshalb eine deutliche Temperaturabhängigkeit der Brechzahl und Ausdehnung zeigt.

Der Sensor ist vorzugsweise als Sicherheitslaserscanner ausgebildet, wobei die Auswertungseinheit dafür ausgebildet ist, die Position erfasster Objekte mit Schutzfeldern zu vergleichen und bei Erkennung eines unzulässigen Schutzfeldeingriffs einen sicheren Ausgang mit einem Abschaltsignal anzusteuern. Für derartige Anwendungen ist insbesondere die vereinfachte Frontscheibenüberwachung von Vorteil.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2: eine dreidimensionale Ansicht einer keilförmigen Empfangslinse;
- Fig. 3: eine Darstellung des Sende- und Empfangsstrahlengangs in dem Laserscanner nach Figur 1;
- Fig. 4: eine Darstellung des Empfangslichtflecks in einem erfindungsgemäßen Laserscanner bei unterschiedlichen Temperaturen;
- Fig. 5: eine beispielhafte Darstellung der Signaldynamik in einem erfindungsgemäßen Laserscanner bei unterschiedlichen Temperaturen;
- Fig. 6: eine Darstellung des Sende- und Empfangsstrahlengangs in einem herkömmlichen Laserscanner; und
- Fig. 7: eine Darstellung der Signaldynamik in einem herkömmlichen Laserscanner bei unterschiedlichen Temperaturen.

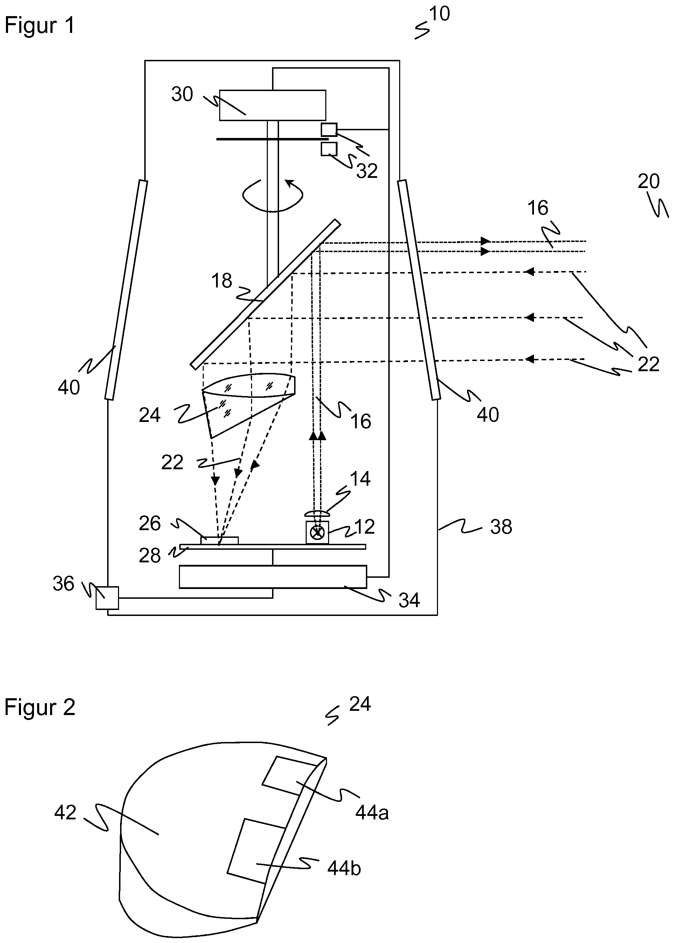

Fig. 1 zeigt eine schematische Schnittdarstellung durch einen erfindungsgemäßen Laserscanner 10, der insbesondere als entfernungsmessender Sicherheitslaserscanner ausgebildet ist. In einem Grundaufbau ähnlich dem einleitend zu Figur 6 beschriebenen herkömmlichen Laserscanner erzeugt ein Lichtsender 12, etwa ein Laser, ein Lichtsignal beispielsweise in Form von kurzen Lichtimpulsen oder periodisch amplitudenmoduliertem Licht. Das Sendelicht wird von einer Sendeoptik 14 zu einem ausgesandten Lichtstrahl 16 kollimiert, der über eine bewegliche Ablenkeinheit 18 in einen Überwachungsbereich 20 gelenkt und dort von einem gegebenenfalls vorhandenen Objekt remittiert oder reflektiert wird. Ein Teil dieses Lichts kehrt als einfallender remittierter Lichtstrahl 22 zu dem Laserscanner 10 zurück und wird von der Ablenkeinheit 18 zu einer Empfangsoptik 24 umgelenkt und von dort auf einen Lichtempfänger 26 gebündelt, beispielsweise eine Photodiode oder APD (Avalanche Photo Diode).

Die Empfangsoptik 24 ist so gestaltet, dass der einfallende remittierte Lichtstrahl 22 nicht nur gebündelt, sondern auch abgelenkt wird. Der Hauptstrahl des einfallenden remittierten Lichtstrahls 22 wird demnach aus seiner ursprünglichen Einfallsrichtung gebrochen. Dadurch entfernt sich der remittierte Lichtstrahl 22 von dem ausgesandten Lichtstrahl 16, es entsteht ein vergrößerter Basisabstand zwischen Lichtsender 12 und Lichtempfänger 26. Das ermöglicht es, Lichtsender 12 und Lichtempfänger 26 auch bei sehr kleiner Bauform des Laserscanners 10 nebeneinander und sogar im Abstand auf einer gemeinsamen Leiterplatte 28 unterzubringen, obwohl die Empfangsoptik 24 sehr dicht an den ausgesandten Lichtstrahl 16 herangerückt ist.

Die Ablenkeinheit 18 kann als Schwingspiegel ausgestaltet sein, ist aber in der Regel ein Drehspiegel, der durch Antrieb eines Motors 30 kontinuierlich rotiert. Die jeweilige Winkelstellung der Ablenkeinheit 18 wird über einen Encoder 32 erfasst. Der von dem Lichtsender 12 erzeugte Lichtstrahl 16 überstreicht somit den durch die Bewegung erzeugten Überwachungsbereich 20. Wird von dem Lichtempfänger 26 ein remittierter Lichtstrahl 22 aus dem Überwachungsbereich 20 empfangen, so kann aus der Winkelstellung der Ablenkeinheit 18 mittels des Encoders 32 auf die Winkellage des Objektes in dem Überwachungsbereich 20 geschlossen werden.

Zusätzlich wird die Lichtlaufzeit von Aussenden des Lichtstrahls 16 bis zu dem Empfang des remittierten Lichtstrahls 22 nach Reflexion an dem Objekt in dem Überwachungsbereich 20 ermittelt. Dazu sind alle Lichtlaufzeitverfahren denkbar. Aus der Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 34, die dafür mit der Leiterplatte 28 des Lichtsenders 12 und des Lichtempfängers 26, dem Motor 30 und dem Encoder 32 verbunden ist. Alternativ ist die Auswertungseinheit zumindest teilweise mit auf der Leiterplatte 28 implementiert.

Über den Winkel und die Entfernung stehen dann zweidimensionale Polarkoordinaten aller Objekte in dem Überwachungsbereich 20 zur Verfügung. In dem Überwachungsbereich 20 können somit zweidimensionale Schutzfelder definiert werden, in die unzulässige Objekte wie Bedienpersonen oder deren Körperteile nicht eingreifen dürfen. Erkennt die Auswertungseinheit 34 einen unzulässigen Schutzfeldeingriff, so wird über einen sicheren Ausgang 36 (OSSD, Output Signal Switching Device) ein sicherheitsgerichtetes Abschaltsignal ausgegeben, um beispielsweise eine überwachte gefährliche Maschine anzuhalten oder in eine ungefährliche Position zu verbringen.

Alle genannten Funktionskomponenten sind in einem Gehäuse 38 angeordnet, das im Bereich des Lichtaus- und Lichteintritts eine umlaufende Frontscheibe 40 aufweist. Nicht dargestellt sind optische Testkanäle, die an mehreren Stellen die Frontscheibe 40 mit Testlicht durchstrahlen und so auf eine homogene Verschmutzung oder die Anwesenheit von Abschattungsobjekten prüfen.

Figur 2 zeigt eine dreidimensionale Ansicht einer keilförmigen Empfangslinse 42, die Teil einer Empfangsoptik 24 oder bereits die ganze Empfangsoptik 24 ist. Die keilförmige Empfangslinse 42 insgesamt ist plankonvex, d. h. eine der Hauptflächen ist flach und die andere konvex gekrümmt. Die beiden Hauptflächen stehen aber nicht parallel zueinander, sondern schließen einen spitzen Keilwinkel ein. Der Keil zeigt dabei auf den ausgesandten Lichtstrahl 16, damit die Ablenkung des Hauptstrahls in die gewünschte Richtung erfolgt und tatsächlich den Basisabstand zwischen Lichtsender 12 und Lichtempfänger 26 vergrößert. Anders herum ausgedrückt handelt es sich bei der keilförmigen Empfangslinse 42 um ein Dreiecksprisma, also einen Keil, der durch konvexe Krümmung mindestens einer Hauptfläche als Linse ausgebildet ist. So können die beiden Funktionen der Strahlformung beziehungsweise Bündelung einerseits und der Ablenkung der Hauptstrahlrichtung andererseits durch ein einziges optisches Element verwirklicht werden. Alternativen für die gewünschte Strahlbündelung und -führung sind denkbar, etwa indem eine konvexe Linse und ein Prisma hintereinander angeordnet werden, gegebenenfalls diese beiden Elemente einstückig miteinander ausgebildet werden.

Wie in Figur 2 zu erkennen, ist die keilförmige Empfangslinse 42 abgeschnitten. In einer Draufsicht ist sie daher nicht kreisförmig, sondern es fehlt ein Kreissegment. Das ermöglicht, die Empfangsoptik 24 noch näher an den ausgesandten Lichtstrahl 16 heranzuführen, ohne dessen Strahlengang zu berühren.

Die keilförmige Empfangslinse 42 weist außerdem vorzugsweise eine erweiterte, hier zweigeteilte Nahzone 44a-b auf. Eine Nahzone an sich ist bekannt und dient wie einleitend beschrieben dazu, die Signaldynamik für kurze Entfernungen anzuheben. Durch die räumliche Trennung in zwei oder mehr Nahzonen 44a-b wird zusätzlich erreicht, dass das Signal im Nahbereich nicht mehr vollständig durch einzelne kleine Objekte verdeckt werden kann. Deshalb wird so eine verbesserte Robustheit gegenüber punktuellen Verschmutzungen und Manipulationen bis zu einer festgelegten Maximalgröße des Stör- oder Manipulationsobjekts erreicht. Daher ist nicht mehr erforderlich, dass eine Verschmutzungsmessung diese Aufgaben mit übernimmt, und so genügen für deren sichere Funktion deutlich weniger Testkanäle.

Eine geteilte Nahzone 44a-b ist nur ein Beispiel für eine Verteilung der Nahzone auf einen größeren Bereich. Der geschilderte Vorteil kann auch erzielt werden, wenn sich die Nahzone auf andere Weise auf einen Bereich erstreckt, der durch kleine Objekte nicht verdeckt werden kann. Ein weiteres Beispiel ist daher eine ringförmige Nahzone in der Nähe des Außenrands der keilförmigen Empfangslinse 42. Übrigens kann der Vorteil einer vergrößerten oder räumlich aufgetrennten Nahzone für beliebige Empfangslinsen auch ohne Keilform genutzt werden.

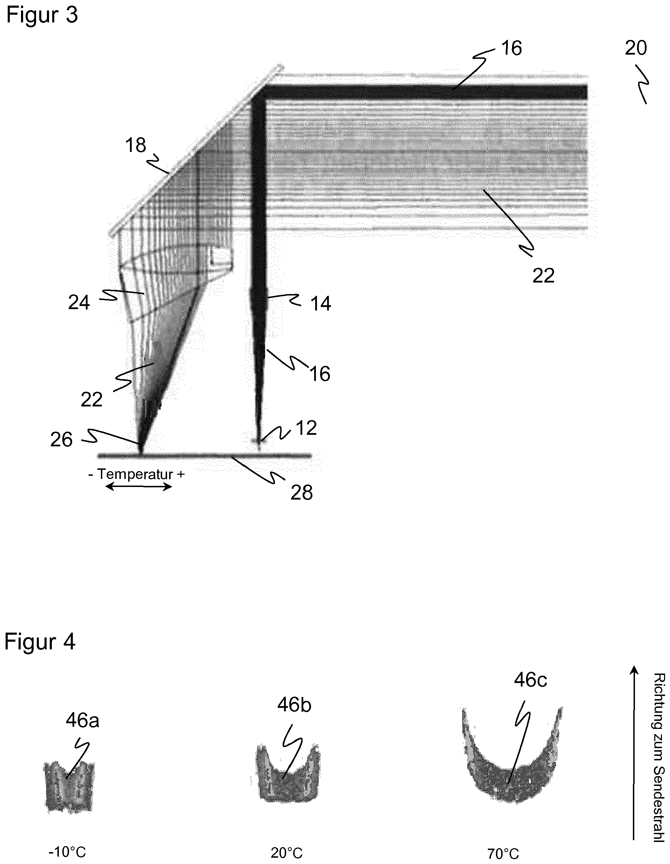

Figur 3 zeigt noch einmal die Strahlführung in dem Laserscanner 10 vergrößert und mit weiteren Teilstrahlen. Deutlich zu erkennen ist der biaxale Strahlengang, bei dem der ausgesandte Lichtstrahl 16 neben dem einfallenden remittierten Lichtstrahl 22 angeordnet ist. Durch die Empfangsoptik 24, insbesondere mit einer keilförmigen Empfangslinse 42, wird der remittierte Lichtstrahl 22 geknickt und so der Basisabstand im unteren Bereich der Strahlführung vergrößert, was es ermöglicht, den Abstand zwischen Sendeoptik 14 und Empfangsoptik 24 weiter zu verringern und Lichtsender 12 mit Lichtempfänger 26 auf einer gemeinsamen Leiterplatte 28 unterzubringen. Das elektronische Übersprechen wird durch die Abstandsvergrößerung ebenfalls verringert, und der zusätzlich gewonnene Bauraum zwischen Lichtsender 12 und Lichtempfänger 26 kann genutzt werden, um gegebenenfalls zur Streulichtunterdrückung Abschirmungen beispielsweise in Form optischer Blenden zu positionieren.

Die erfindungsgemäße Empfangsoptik 24 hat aber nicht nur den Vorteil, kleinere Bauformen zu ermöglichen. Sie kann auch genutzt werden, um das einleitend erläuterte nachteilige Temperaturverhalten der Signaldynamik zu kompensieren. Dazu sollte der Keil der keilförmigen Empfangslinse 42 zu dem ausgesandten Lichtstrahl 16 hin weisen, wie in Figur 3 dargestellt und deren Planfläche entsprechend geneigt und orientiert sein.

Der Brechungsindex von Kunststoff, aus dem die keilförmige Empfangslinse 42 vorzugsweise hergestellt ist, beispielsweise Polycarbonat, nimmt bei ansteigender Temperatur ab. Deshalb wird der remittierte Lichtstrahl 22 von der Empfangsoptik 24 bei ansteigender Temperatur schwächer gebrochen, und das Zentrum des Empfangslichtflecks wandert zum ausgesandten Lichtstrahl 16 hin. Bei abnehmender Temperatur ist es entsprechend umgekehrt, wie durch den Pfeil in Figur 3 angedeutet.

Es ist daher vorteilhaft, die Fokussierung beziehungsweise Fokuslänge für den Empfangslichtfleck so auszulegen, dass der Spotdurchmesser bei zunehmender Temperatur größer und bei abnehmender Temperatur kleiner wird. Mit anderen Worten sollte die Empfangsoptik den Empfangslichtfleck gerade bei der niedrigsten Betriebstemperatur optimal fokussieren, während der Empfangslichtfleck bei Nominal- oder Raumtemperatur leicht defokussiert ist.

Figur 4 zeigt dazu beispielhafte Empfangslichtflecken 46a-c bei -10°C, 20° und 70°C. Es ist deutlich zu erkennen, dass sich der Empfangslichtfleck 46a-c durch geeignete Fokussierung mit zunehmender Temperatur vergrößert. Die Ablenkwirkung der Empfangsoptik 42 sorgt dafür, dass sich diese Vergrößerung in Richtung zum Sendestrahl, also dem ausgesandten Lichtstrahl 16 hin auswirkt.

Gleichzeitig wandert der bei Maximalreichweite optimal fokussierte Empfangslichtfleck 46a-c bei Verringerung des Objektabstands aus dem Sichtfeld des Lichtempfängers 26. Die Geschwindigkeit dieser Wanderung hängt von Spotdurchmesser und Position des Spotzentrums ab. Es ist daher möglich, das Temperaturverhalten der Signaldynamik zu kompensieren, indem die Eingangsgrößen wie Material der Empfangsoptik 24, Fokuslänge, Keilwinkel, Spotdurchmesser, Durchmesser des Lichtempfänger 26 und Justage des Empfangslichtflecks 26 aufeinander abgestimmt werden.

Figur 5 zeigt ein entsprechendes Ergebnis als Vergleich der Signaldynamik einer erfindungsgemäßen Empfangsoptik 24 bei -10°C (gestrichelte Linie), 20°C (gepunktete Linie) und 70°C (durchgezogene Linie). Im Vergleich zum Stand der Technik nach Figur 7 ist die Temperaturabhängigkeit signifikant reduziert.

## Patentansprüche

1. Optoelektronischer Sensor (10), insbesondere Laserscanner, zur Erfassung von Objekten in einem Überwachungsbereich (20), der einen Lichtsender (12) zum Aussenden eines Lichtstrahls (16), eine Ablenkeinheit (18) zur periodischen Abtastung des Überwachungsbereichs (20) mit dem Lichtstrahl (16), einen Lichtempfänger (26) zum Erzeugen eines Empfangssignals aus dem von den Objekten remittierten Lichtstrahl (22), eine dem Lichtempfänger (26) vorgeordnete Empfangsoptik (24) zur Strahlformung des einfallenden remittierten Lichtstrahls (22), nachdem der remittierte Lichtstrahl (22) von der Ablenkeinheit (18) umgelenkt wurde, sowie eine Auswertungseinheit (34) aufweist, die dafür ausgebildet ist, aus dem Empfangssignal Informationen über die Objekte in dem Überwachungsbereich (20) zu gewinnen, wobei die Empfangsoptik (24) dafür ausgebildet ist, die Hauptstrahlrichtung des einfallenden remittierten Lichtstrahls (22) abzulenken,
**dadurch gekennzeichnet,**
**dass** die Empfangsoptik (24) eine keilförmige Empfangslinse (42) aufweist, d.h. eine als Dreiecksprisma ausgebildete Linse, wobei mindestens eine Hauptfläche konvex gekrümmt ist und wobei die zwei Hauptflächen einen spitzen Keilwinkel einschließen, oder eine einstückige Verbindung einer Linse mit einem Prisma.

2. Sensor (10) nach Anspruch 1,
wobei die Empfangsoptik (24) mindestens eine Grenzfläche aufweist, die gegenüber einer Querschnittsfläche des einfallenden remittierten Lichtstrahls (22) verkippt ist.

3. Sensor (10) nach Anspruch 1 oder 2,
wobei die keilförmige Empfangslinse (42) plankonvex ausgebildet ist.

4. Sensor (10) nach einem der vorhergehenden Ansprüche,
wobei die keilförmige Empfangslinse (42) in einer Draufsicht einen abgeschnittenen Kreis bildet.

5. Sensor (10) nach einem der vorhergehenden Ansprüche,
wobei die keilförmige Empfangslinse (42) eine Nahbereichszone (44a-b) aufweist, die deutlich größer ist als die Verdeckung durch ein normiertes Abdeckungsobjekt.

6. Sensor (10) nach einem der vorhergehenden Ansprüche,
wobei Lichtsender (12) und Lichtempfänger (26) in einem biaxialen Aufbau nebeneinander mit zueinander parallelen optischen Achsen angeordnet sind.

7. Sensor (10) nach Anspruch 6,
wobei der Lichtsender (12) so neben dem Lichtempfänger (26) angeordnet ist, dass die Empfangsoptik (24) die Hauptstrahlrichtung von dem Lichtsender (12) weg ablenkt.

8. Sensor (10) nach Anspruch 6 oder 7,
wobei Lichtsender (12) und Lichtempfänger (26) auf einer gemeinsamen Platine (28) angeordnet sind.

9. Sensor (10) nach einem der vorhergehenden Ansprüche,
wobei die Empfangsoptik (24) so justiert ist, dass der Empfangslichtfleck (46a-c) bei einer niedrigsten Betriebstemperatur fokussiert ist.

10. Sensor (10) nach einem der vorhergehenden Ansprüche,
der als Sicherheitslaserscanner ausgebildet ist, wobei die Auswertungseinheit (34) dafür ausgebildet ist, die Position erfasster Objekte mit Schutzfeldern zu vergleichen und bei Erkennung eines unzulässigen Schutzfeldeingriffs einen sicheren Ausgang (36) mit einem Abschaltsignal anzusteuern.

11. Verfahren zur Erfassung von Objekten in einem Überwachungsbereich (20), bei dem ein Lichtstrahl (16) ausgesandt, zur Abtastung des Überwachungsbereichs (20) mittels einer beweglichen Ablenkeinheit (18) periodisch abgelenkt, nach Remission oder Reflexion an den Objekten als einfallender Lichtstrahl (22) wieder empfangen und in ein Empfangssignal gewandelt wird, um daraus Informationen über die Objekte in dem Überwachungsbereich (20) zu gewinnen, wobei der einfallende Lichtstrahl (22) nach Umlenken an der Ablenkeinheit (18) in einer Empfangsoptik (24) strahlgeformt wird, wobei in der Empfangsoptik (24) auch die Hauptstrahlrichtung des einfallenden Lichtstrahls (22) abgelenkt wird,
**dadurch gekennzeichnet,**
**dass** die beiden Funktionen der Strahlformung und Ablenkung der Hauptstrahlrichtung der Empfangsoptik (24) durch eine keilförmige Linse verwirklicht werden, d.h. eine als Dreiecksprisma ausgebildete Linse, wobei mindestens eine Hauptfläche konvex gekrümmt ist und wobei die zwei Hauptflächen einen spitzen Keilwinkel einschließen, oder eine einstückige Verbindung einer Linse mit einem Prisma.

## Claims

1. An optoelectronic sensor (10), in particular a laser scanner, for detecting objects in a monitoring area (20), the sensor (10) comprising a light transmitter (12) for transmitting a light beam (16), a deflection unit (18) for periodically scanning the monitoring area (20) with the light beam (16), a light receiver (26) for generating a reception signal from the remitted light beam (22) remitted by the objects, reception optics (24) arranged in front of the light receiver (26) for beam shaping of the incident remitted light beam (22) after the remitted light beam (22) has been deflected by the deflection unit (18), and an evaluation unit (34) configured to obtain information about the objects in the monitoring area (20) from the reception signal, wherein the reception optics (24) are configured to deflect the main beam direction of the incident remitted light beam (22),
**characterized in that** the reception optics (24) comprise a wedge-shaped reception lens (42), i.e. a lens formed as a triangular prism with at least one main surface being convexly curved and the two main surfaces enclosing an acute wedge angle, or a one-piece combination of a lens and a prism.

2. The sensor (10) according to claim 1,
wherein the reception optics (24) comprise at least one boundary surface which is tilted with respect to a cross sectional area of the incident remitted light beam (22).

3. The sensor according to claim 1 or 2,
wherein the wedge-shaped reception lens (42) is of planar convex design.

4. The sensor (10) according to any of the preceding claims,
wherein the wedge-shaped reception lens (42), in a top view, forms a cut-off circle.

5. The sensor (10) according to any of the preceding claims,
wherein the wedge-shaped reception lens (42) comprises a near range zone (44a-b) which is significantly larger than a standardized covering object.

6. The sensor (10) according to any of the preceding claims,
wherein light transmitter (12) and light receiver (26) are arranged side-by-side with mutually parallel optical axes in a biaxial configuration.

7. The sensor (10) according to claim 6,
wherein the light transmitter (12) is arranged next to the light receiver (26) so that the reception optics (24) deflect the main beam direction away from the light transmitter (12).

8. The sensor (10) according to claim 6 or 7,
wherein light transmitter (12) and light receiver (26) are arranged on a common circuit board (28).

9. The sensor (10) according to any of the preceding claims,
wherein the reception optics (24) are adjusted so that the reception light spot (46a-c) is focused at a lowest operating temperature.

10. The sensor (10) according to any of the preceding claims,
which is configured as a safety laser scanner, wherein the evaluation unit (34) is configured to compare the position of detected objects with protected fields and to control a safe output (36) with a shutdown signal upon detection of an inadmissible protected field intrusion.

11. A method for detecting objects in a monitoring area (20), wherein a light beam (16) is transmitted, is periodically deflected by means of a movable deflection unit (18) in order to scan the monitoring area (20), is received as an incident light beam (22) after remission or reflection by the objects and converted into a reception signal in order to obtain information about the objects in the monitoring area (20), wherein the incident light beam (22) is beam-shaped in reception optics (24) after deflection by the deflection unit (18), wherein also the main beam direction of the incident light beam (22) is deflected in the reception optics (24),
**characterized in that** the two functions of beam-shaping and deflecting the main beam direction of the reception optics (24) are implemented by means of a wedge-shapes lens, i.e. a lens formed as a triangular prism with at least one main surface being convexly curved and the two main surfaces enclosing an acute wedge angle, or a one-piece combination of a lens and a prism.

## Revendications

1. Capteur optoélectronique (10), en particulier scanneur laser, destiné à détecter des objets dans une zone à surveiller (20), qui comprend un émetteur de lumière (12) pour émettre un rayon lumineux (16), une unité de déviation (18) pour balayer périodiquement la zone à surveiller (20) avec le rayon lumineux (16), un récepteur de lumière (26) pour produire un signal de réception à partir du rayon lumineux (22) réémis par les objets, une optique de réception (24) agencée en amont du récepteur de lumière (26) et destinée à mettre en forme le rayon lumineux incident réémis (22), une fois que le rayon lumineux réémis (22) a été dévié par l'unité de déviation (18), ainsi qu'une unité d'évaluation (34) conçue pour obtenir à partir du signal de réception des informations relatives aux objets dans la zone à surveiller (20), l'optique de réception (24) étant conçue pour dévier la direction de rayonnement principale du rayon lumineux incident réémis (22), **caractérisé en ce que**
l'optique de réception (24) comprend une lentille de réception (42) en forme de coin, c'est-à-dire une lentille réalisée sous forme de prisme triangulaire, au moins une surface principale étant incurvée de façon convexe et les deux surfaces principales définissant un angle de coin aigu, ou bien elle présente une liaison d'un seul tenant d'une lentille avec un prisme.

2. Capteur (10) selon la revendication 1,
dans lequel
l'optique de réception (24) présente au moins une surface limite qui est basculée par rapport à une surface de section transversale du rayon lumineux incident réémis (22).

3. Capteur (10) selon la revendication 1 ou 2,
dans lequel
la lentille de réception (42) en forme de coin est réalisée sous forme plan-convexe.

4. Capteur (10) selon l'une des revendications précédentes,
dans lequel la lentille de réception (42) en forme de coin forme un cercle coupé en vue de dessus.

5. Capteur (10) selon l'une des revendications précédentes,
dans lequel
la lentille de réception (42) en forme de coin comprend une zone de proximité (44a-b) qui est nettement plus grande que le recouvrement par un objet de recouvrement normé.

6. Capteur (10) selon l'une des revendications précédentes,
dans lequel
l'émetteur de lumière (12) et le récepteur de lumière (26) sont agencés l'un à côté de l'autre dans une structure biaxiale et présentent des axes optiques parallèles l'un à l'autre.

7. Capteur (10) selon la revendication 6,
dans lequel
l'émetteur de lumière (12) est agencé à côté du récepteur de lumière (26) de telle sorte que l'optique de réception (24) fait dévier la direction de rayonnement principale en éloignement de l'émetteur de lumière (12).

8. Capteur (10) selon la revendication 6 ou 7,
dans lequel
l'émetteur de lumière (12) et le récepteur de lumière (26) sont agencés sur une platine commune (28).

9. Capteur (10) selon l'une des revendications précédentes,
dans lequel
l'optique de réception (24) est ajustée de telle sorte que le point de lumière de réception (46a-c) est focalisé à une température de fonctionnement la plus basse.

10. Capteur (10) selon l'une des revendications précédentes,
qui est réalisé sous forme de scanneur laser de sécurité, l'unité d'évaluation (34) étant réalisée pour comparer la position d'objets détectés avec des champs de protection et pour piloter une sortie sécurisée (36) par un signal de coupure lorsqu'une intervention inadmissible du champ de protection est identifiée.

11. Procédé pour détecter des objets dans une zone à surveiller (20),
dans lequel on émet un rayon lumineux (16), on le fait dévier périodiquement pour balayer la zone à surveiller (20) au moyen d'une unité de déviation mobile (18), on le reçoit de nouveau en tant que rayon lumineux incident (22) après réémission ou réflexion sur les objets, et on le convertit en un signal de réception pour en obtenir des informations relatives aux objets dans la zone à surveiller (20), le rayon lumineux incident (22) étant mis en forme dans une optique de réception (24) après déviation sur l'unité de déviation (18), la direction de rayonnement principale du rayon lumineux incident (22) étant également déviée dans l'optique de réception (24),
**caractérisé en ce que**
les deux fonctions de l'optique de réception (24) que sont la mise en forme du rayon et de la déviation de la direction de rayonnement principale sont réalisées par une lentille en forme de coin, c'est-à-dire une lentille réalisée sous forme de prisme triangulaire, au moins une surface principale étant incurvée de façon convexe et les deux surfaces principales définissant un angle de coin aigu, ou bien par une liaison d'un seul tenant d'une lentille avec un prisme.
